# EUROPEAN PATENT SPECIFICATION

(11) **EP 3 916 254 B1**
(45) Date of publication and mention of the grant of the patent: **08.07.2026**
(21) Application number: 20193640.8
(22) Date of filing: 31.08.2020
(51) Int. Cl.: G01M 15/14, H02P 21/05, F16C 17/02, G01H 1/00, F02C 7/06, G01M 13/045, F16C 17/24

(54) **SYSTEM AND METHOD FOR DETECTING VIBRATIONS IN ROTATING MACHINERY**
SYSTEM UND VERFAHREN ZUR ERFASSUNG VON SCHWINGUNGEN IN ROTIERENDEN MASCHINEN
SYSTÈME ET PROCÉDÉ DE DÉTECTION DE VIBRATIONS DANS DES MACHINES ROTATIVES

(30) Priority: 28.05.2020 EP 20177133
(43) Date of publication of application: 01.12.2021
(73) Proprietor: Rolls-Royce Deutschland Ltd & Co KG, 15827 Blankenfelde-Mahlow (DE)
(72) Inventor: CICIRIELLO, Lucia, 15827 Blankenfelde-Mahlow (DE)
(74) Representative: Maikowski & Ninnemann Patentanwälte Partnerschaft mbB

(56) References cited:
- EP-A1- 2 811 278
- EP-A1- 2 838 185
- EP-B1- 0 270 354
- EP-B1- 2 626 577
- EP-B1- 3 447 469
- WO-A1-2016/143882
- DE-T5- 112018 001 755
- CORNE BRAM ET AL: "Stator current measurements as a condition monitoring technology - The-state-of-the", 2014 INTERNATIONAL CONFERENCE ON ELECTRICAL MACHINES (ICEM), IEEE, 2 September 2014 (2014-09-02), pages 1659 - 1665, XP032687772, DOI: 10.1109/ICELMACH.2014.6960405

## Description

The present disclosure relates to a system and method for rotor vibration detection, and to an engine for an aircraft.

A common problem in the field of rotating machinery is controlling the level of vibration. Vibration may be caused by imbalances and misalignment of rotating parts, such as a shaft and supported rotatable elements, such as, e.g., compressor and turbine discs and blades in gas turbine engines, and also external forcing such as, e.g., aircraft maneuvers and aerodynamic forces in the aircraft.

In hydrodynamic journal bearings, for example, fluid-excited instabilities may occur at certain operating conditions, in particular at high speeds due to the variation of the gap, or clearance, between the rotor and the stator which is filled by oil. Oil film induced vibrations may cause additional dynamic (in particular cyclic) displacements onto the rotor (e.g., journal) with the effect of increasing the orbits of the rotors. Precession orbits may appear in superposition with the journal spinning and appear combined in different ways depending on the possibilities given by the system clearances and degrees of freedom of the journal shaft (e.g., a system where the axes of the journals are carried in precession may present several onsets of orbiting, each one corresponding to specific frequencies in the vibration signature. Precession orbits can be backwards or forwards with respect to the journal sense of rotation and this also change the frequency in the vibrational signature. Even though backward orbits are possible, in most of the cases the rotor orbits induced by oil film are travelling in forward direction. Oil film induced vibrations can increase the shaft orbits or, in case the shaft is prevented to orbit any further, in turn may further variate the oil film gap and, therefore, the oil pressure distribution. By this, also the rotor clearances and the shaft alignment may be influenced to a point where the displacements and rotations exceed the nominal design conditions. Also the misalignment of the journal (rotation about a longitudinal axis) can generate gap variations that may have the effect of inducing rotor orbits, which in this specific case are travelled at twice the fundamental frequency of the rotor. It is worth noticing that axial vibration may also be generated in superposition to the rotor orbits. The oil film induced vibrations can appear both in a stable or instable onset, the difference depending on whether the magnitude of the vibration remains constant versus time, in stationary speed and loads, or increases rapidly also at steady conditions.

Stable oil film-induced vibrations are often indicated with the term oil whirl (wherein the term whirl relates to orbits), whilst with the term the oil whip vibrations generated by the oil film orbit coincident with a rotor resonance having a divergent, instable behavior are indicated. The oil whip has the same mechanism as the oil whirl but can be more critical and is almost always instable, because in this case the periodic force induced by the orbit of oil film becomes able to excite a rotor resonance. Even though this distinction is correct in most cases, there are also instable oil whirl and relatively stable oil whip (the latter being anyways dangerous because the rotor can suddenly become incontrollable causing metal to metal contacts).

Oil whirl orbiting can be sub-synchronous or synchronous with respect to the rotor. Whether the precessional orbit is travelled by a journal at about half of the rotor speed or at a speed close or equal to the rotor speed, depends on the internal pressure and temperature distribution in the oil film which are determined by speed and load conditions. The frequency at which the precessional orbit is travelled is related to the average tangential speed of the oil film mass contained in the journal bearing. In case of orbits travelled at 2x revolution orbits due to misalignment, the oil film average rotational speed does not influence directly the frequency of the orbits and axial vibration, but may have an effect on the magnitude of such vibration. When oil whirl and oil whip set in, hydraulic forces may destabilize and increase the motion of the rotor and induce a self-excited vibration. Such a vibration typically has very high amplitudes. In turn, the rotor can be forced into a large eccentricity that could even lead to a collision with another component. This effect may thus reduce the lifetime of the journal bearing or could even cause a sudden failure. Particularly stiffer rotor systems with reduced clearances are prone to detrimental oil film instability when the journal bearing undergoes high loads and speeds. Vibrations induced by gap variations may also be present in oil and air seals. In particular, the unwanted forces that are generated by the oil film that becomes constrained in a reduced gap by the shaft deformation, offset and misalignment may develop periodic forces of a magnitude capable to make the rotor to precession a sub-synchronous orbit.

Similar effects related to rotor vibration and orbits generated under the effect of gap-dependent unbalanced forces onto the rotors occur at other types of rotatable components, and also in rotating systems with fluids other than oil, e.g., in systems with gases or gas mixtures, such as air, in a gap between the rotating components. As an example, a non-uniform blade tip clearance distribution of a turbine disc due to a displacement of a rotor shaft during vibration may produce a force that causes additional rotor orbits, superimposed to its spin, that may generate vibrations at a frequency lower than the rotor fundamental frequency. Similarly to the journal bearing oil whip and whirl, the gap-dependent vibration can appear with orbits and vibration that have frequency coincident to the rotor frequency. This case can be seen as an extreme case of a vibration that starts sub-synchronous and builds up until the frequency of the orbits becomes equal to the rotor spin frequency. Vibrations that are here referred to as induced by gap-dependent forces can also be related with the generic sub-synchronous or non-synchronous vibration. If the damping is not enough, gap-dependent vibration in turbines can force the respective rotor to travel on precession orbits that are able to create an instability. Such gap-dependent unbalanced forces are commonly referred to as Alford forces. Corresponding forces in compressors are often referred to as Wachel forces. In electrical machines, e.g., in electric motors, in electric generators and in magnetic bearings, corresponding effects related to the variation of the gap between rotors and stators and the correspondent magnetic flux variation. In electric machines the gap-dependent vibrations generated form within the drive are commonly compensated by coils and circuits that aim at suppressing the unbalanced pull lead to a phenomenon typically referred to as unbalanced magnetic pull. The vibrations due to gap-dependent forces are generated by the reaction of oil, air or magnetic fields to the changes mainly in the radial gaps between rotors and stators that are not symmetrical in circumferential direction, in filling cavities, bearing chambers and the like. It is worth noting that the variation of the gap also in axial direction can generate vibration but in general they are not sub-synchronous.

While such vibrations due to gap-dependent forces may lead to an increased wear of parts of the machinery, a rapid deterioration of performances, power and torque modulation, or even a failure of these parts, it has been difficult to detect an onset of these forces, especially when acting simultaneously on many rotors, e.g., like in an aircraft engine, early enough and in a reliable manner.

EP 2 811 278 A1 relates to sensorless and continuous monitoring of electric generator rotor unbalance, wherein an aspect includes measuring instantaneous speed of a generator rotor based on an electrical waveform from the generator. A speed flutter is extracted from the electrical waveform. The speed flutter of embodiments represents a time-based distortion of the electrical waveform. Accordingly, a magnitude of generator rotor unbalance is then quantified proportional to the speed flutter

EP 2 838 185 A1 describes damping of radial vibrations of a shaft on an electrical machine, wherein stator windings can be supplied with an electrical current for damping a vibration detected by a sensor.

It is an object to provide a precise and early detection of vibrations due to gap-dependent forces.

According to an aspect there is provided a system for vibration detection. The system comprises one or more driveline(s) including a rotatable component rotatable about a rotational axis relative to another component, wherein a fluid (such as oil or air) is arranged in a clearance between the rotatable component and the other component. The system further comprises an electrical machine (e.g., an electric motor and/or generator or a magnetic bearing) having a rotor and a stator rotatable with respect to one another. The rotor of the electrical machine is arranged to drive and/or to be driven by, or support, a part of the driveline (e.g., by and/or via the rotatable component). Therein, the electrical machine is adapted to provide signals that are indicative for a motion and/or of a force and/or a torque (in particular indicative for sub-synchronous to synchronous orbits; when one or more rotors are connected to the electrical machine, different frequencies correspondent to different onsets; the onset of gap-dependent orbits of each rotor can be isolated and amplified within the drive circuits, so that each characteristic frequency can be identified and monitored) between the rotor and the stator, or applied on the rotor, respectively. The rotatable component is external of the electrical machine and the rotor of the electrical machine, and the rotatable component are in operative connection. The system further comprises an analysis unit adapted to receive the signals from the electrical machine, and to detect a vibration signature of the rotatable component with respect to the other component based on the signals received from the electrical machine (or of rotatable components in series or parallel (e.g. shafts in series or planets of a power gearbox that are in parallel connected to an electrical motor drive; advantageously, also beating frequencies (sidebands) can be detected within the drive, e.g., generated by cross-shaft vibration when the rotational speed ratio of two different rotors approaches integer conditions). Optionally, the analysis unit is further adapted to generate a command based on the detection of the vibration signature. The analysis unit may be adapted to send this command to the electrical machine and/or a control system, such as an engine FADEC (full authority digital engine control). The analysis unit is adapted to detect the vibration signature within a predetermined frequency range, wherein the predefined frequency range is between 0.1 and 1.0 times the rotational speed of the rotatable component with respect to the other component.

This is based on the finding that when an electrical machine, such as an electrical drive, is connected to the rotatable component, unbalanced magnetic forces are induced in the electrical machine as a consequence of asymmetrical gap-dependent forces being generated on other rotors (i.e., outside the electrical machine, connected with the electrical machine, but different, particularly displaced thereof), because of a loss of alignment somewhere in the driveline. Therefore, the electrical machine may serve as a vibration sensor for components of the driveline external of the electrical machine. Indeed, since the electrical machine is operatively connected to the driveline, it could be regarded as an intrinsic vibration sensor that allows improved measurement accuracy with respect to external sensors, and with particularly short response times. Thus, the system allows a particularly precise and early detection of vibrations due to gap-dependent forces., as well as of the related synchronous and super synchronous (e.g., 2, 3, 4 or 5 times the rotor frequency; the analysis unit may be adapted to monitor these frequencies) vibration that are generated by a loss of alignment in the engine driveline.

For example, the signals are indicative for asymmetric magnetic forces in the electrical machine. Alternatively or in addition, the signals are generated based on asymmetric magnetic forces in the electrical machine, e.g., measured by the electrical machine. This allows a particularly high precision of the measurement.

The electrical machine may comprise a plurality of electrically conductive coils. Optionally, the signals are indicative for and/or based on differences among voltages and/or electrical currents of (at and/or in) the plurality of coils, e.g., between at least one coil and at least one other (e.g., opposing) coil. This may be indicative for an asymmetric arrangement of the rotor relative to the stator of the electrical machine, which may be the direct result of a corresponding asymmetry of the rotatable component relative to the other component, and a corresponding asymmetry in the clearance between these components. Such a measurement allows particularly fast response times.

The rotor of the electrical machine and the rotatable component are in operative connection. For example, the rotor of the electrical machine and the rotatable component are connected such that a rotation of one of these parts effects a rotation of the other of these parts. Optionally, the rotor of the electrical machine and the rotatable component are fixedly connected to one another (or at least rotationally fixed with respect to one another). Also a number of rotatable components in series or in parallel connected in sequence to one or more electrical drives are conceivable.

The analysis unit may be adapted to perform a frequency analysis. The analysis unit may be adapted to determine a property of a vibration signature, e.g., within one or more predetermined frequency range(s), based on the signals at the different points in time. Optionally, the predetermined frequency range depends on the speed and/or performance regulation (e.g., a state defined by torque, power, altitude, speed, temperature, pressure, fuel intake, and/or variable vanes etc.) of the rotatable component (or of another rotating part of the driveline). Optionally, the analysis unit is adapted to generate a command based on a comparison of the property of the vibration signature with a predetermined threshold. An example of a vibration signature is a peak in a frequency spectrum of the signals. This allows a particularly precise and early detection of certain vibrations of the rotatable component. Due to the mutual influence that rotor vibrations and performance deterioration have in aircraft engines, vibration level and the state of the engine in terms of performance regulation parameters is integrated and compared to baselines (e.g., orbits versus fuel consumption and/or the like) in various embodiments. It is worth noting that optional active controllers can mistune integer speed ratio conditions (of two rotatable components) and, e.g., target a speed ratio close to an irrational ratio of speeds.

The electrical machine may be adapted to provide signals indicative for a motion (in particular for an orbiting motion and/or for a vibration, i.e., a vibratory motion) and/or a force between two components (e.g., of said rotatable component and said other component) and/or a torque applied on one or more component(s) of the driveline at different points in time; and the analysis unit may be adapted (a) to receive the signals and (b) to determine a property of the vibration signature within a predetermined frequency range based on the signals at the different points in time. The analysis unit can thus detect changes of the vibration signature property between the different points in time.

This allows a particularly precise and early detection of certain vibrations and orbits of the rotatable component, because vibrations at frequencies that are characteristic for gap-dependent forces of certain components in the driveline may be monitored. These frequency ranges may be calculated by FEM, look up tables and/or experimental vibration surveys. An increase in magnitude, change of the phase and/or change of the frequency of such signatures may serve as an early warning that indicates a potential incoming fluid instability, even (long) before other, general vibration alarms may be raised by exceeding a total vibration threshold. In addition, the augment of orbits and vibrations generated by gap-dependent forces are related to the cause that generated the gap variation, which may be related to a deterioration in the engine alignment. That is, while the overall vibration and the vibration at the rotor frequency (1/Rev) and at 2/Rev of the rotor frequency may still be well within the design limits, the system described herein allows to identify an onset of a potential strong source of vibration before the vibration actually builds up strongly. In addition, the earlier detection of the source of vibration allows to instate a troubleshooting task in order to find in which specific engine module the deterioration in the rotor alignment is taking place. Possible (quick) alternatives for counteracting a gap-dependent critical vibration (meantime that their cause that is a deterioration in the initial alignment between rotors and stators is reinstated) or instability are to decrease the power, torque and/or mistuning speed and/or to alter pressure and/or temperature of air and oil, respectively, modifying the engine performance regulation state of the rotatable component with the effect of reducing centrifugal and torque loads (and aerodynamic loads on blades with the consequent effect of reducing the amplitude of the gap-dependent forces and related orbits) and/or exit a known resonance condition. However, this has an impact on the operation of the rotatable component, potentially limiting an operative envelope (e.g., of an aircraft having the rotatable component) which does not comply with (e.g., airframe) requirements. On the other hand, a local change of the pressure and/or temperature and/or flow intake of the fluid in the clearance may be possible without restricting the flight envelope in operations. In addition, reducing the pressure can be effected very quickly. Besides temporary solutions that aim at changing the operational state of the engine, a highly effective solution to reduce or eliminate gap-dependent and synchronous vibration is to restore the nominal condition of alignment in the engine driveline. The deterioration of engine alignment is in fact mostly the main source of sub-synchronous gap-dependent, synchronous and super synchronous vibration (e.g., 2x, 3x, 4x, ... number of blades x rotor frequency, number of teeth x rotor frequency etc.). In particular in the field of gas turbines, and even more particular in the field of gas turbine engines for aircrafts, this is of particular relevance. Sub-synchronous vibration generated by variation of gaps and clearances such as the critical oil film vibrations and instabilities may appear as a particular vibration signature (e.g., with a known frequency, phase and/or amplitude that may have been measured or simulated in advance). The analysis unit may store known (potential) signatures and their properties for comparison with vibration signatures in the received signals. Monitoring the onset of such vibration or instability allows to react quickly, if necessary, but above all allows an early detection of a loss of alignment of one or more engine rotors due to component deterioration provoked by wear and tear or unconformities in the design and or manufacturing of engine assembly. This allows an improved control of aerodynamic and hydrodynamic vibrations and instabilities, so that the lifetime and security of the journal bearing - or other rotatable components - can be improved, and
the costs related to maintenance can be reduced by planning tasks with an augmented level of confidence.

The frequency of the vibration may directly be measured, or it may be determined using Fourier transformation, e.g., implemented as fast Fourier transformation (FFT), e.g., based on the received signals. Optionally, one or more predefined threshold(s) for frequency, phase and/or vibration amplitude(s) is/are defined, e.g. in a look-up table. This allows to define a baseline, or nominal acceptable operational conditions, (for both whole engine vibration levels and performance regulations) to compare the monitored data and exclude false positives.

Thus, the electrical machine described further above can act as (and be used as) the sensor. This allows to particularly improve the quality and response time of the measurement, and it is even not necessary to add an additional sensor to perform the measurement, what allows to save space, weight and cost.

The analysis unit may be further adapted to generate a (single or multiple logic of a) command based on a comparison of the property of the vibration signature with a predetermined threshold. That can define the range of nominal engine conditions (vibration and performance) expected to be aligned with the stress levels certified and included in a normal functioning condition. For example, maintenance protocols may be activated in response to the generation of the command (in particular in order to restore the nominal alignment of one or more engine rotors, such as turbines, fans, compressors). Alternatively or in addition, an active means to modify the pressure and/or temperature of the fluid in the clearance may be triggered. The active means may be adjustable in response to the command. For example, the active means is a servo valve that is adapted to change the pressure of the fluid in the clearance.

Examples for the property of the vibration signature are a frequency, a phase and an amplitude, e.g., of a peak in a frequency spectrum. One, two or all thereof may be used to describe and analyze the signals. The system may further comprise at least one sensor to measure a phase of a vibration signature with respect to at least one rotating part, e.g., the rotatable component. Alternatively or in addition, the system may comprise one or more sensors to measure fluid (e.g., oil or air) pressure and/or one or more sensors to measure fluid (e.g., oil or air) temperature of the fluid in the clearance. An optional active control can disrupt the fluid (e.g., oil or air) instability by changing fluid pressure and/or temperature. The system may be adapted to measure and/or receive a value of a torque and/or power transmitted by the rotatable component. It is worth noting that that for applications at engines, e.g., gas turbine engines, engine speed and power (or torque) signals may be made available to the analysis unit (e.g., obtained from a FADEC of the engine). Optionally, the analysis unit is adapted to determine a change of a phase of the vibration signature, and to provide a control signal based on the change of the phase. Phase measurements allow to distinguish whether a synchronous vibration is induced by gap-dependent forces or by other causes (for instance rotor unbalance, couplings that operate out of an allowable offset and misalignment range, electrical motor distortions etc.). A trend analysis on amplitudes of vibration signatures determined using an FFT may be carried out by the analysis unit, in particular at relevant (e.g., predefined) frequencies (at which the gap-dependent vibration is expected to appear, e.g., by analytical and/or FEM calculations for a given journal bearing design). This analysis may be continuously carried out and/or the results compared with a look-up table of thresholds based on the radial and/or axial clearances. In this manner, the risk of a metal-to-metal contact may be noticeably reduced by means of an active controlled action taking place.

Optionally, the rotatable component and the other component are parts of a driveline that comprises a turbine and/or a compressor. The driveline may be adapted for an engine, e.g., a gas turbine engine, in particular a hybrid gas turbine engine that can be driven by the combustion of fuel, and that can also be driven by providing an electrical current to the electrical machine. For example, the rotatable component itself is a turbine, a compressor, a shaft, a gear wheel, a part of an oil seal, a part of a bearing (rolling bearing or magnetic bearing), or a part of a squeeze film damper. According to one example, the rotatable component is a planet gear of an epicyclic gearbox, and the other component is a planet carrier of the epicyclic gearbox. Notably, in some applications, planet gears in epicyclic gearboxes are rotated at very high speeds and under high loads.

The analysis unit may be adapted to determine whether the received signals comprise a vibration signature with a frequency within the predetermined frequency range, and/or with an amplitude above a predefined threshold. The signals from different shafts may be combined and/or frequencies due to cross-shaft vibration can be monitored and trends can be detected. One or more active signal(s) can be sent to one or more engine controller(s), e.g., one or more speed controller(s) in order to mistune an integer speed ratio between shaft speeds. Optionally, an irrational ratio speed ratio can be commanded to reduce cross-shaft vibrations. The threshold for the amplitude of such a signature may be set much lower than other vibration thresholds, so that a detection of potentially critical vibrations is possible before the overall vibration level actually becomes detrimental.

The predefined range is below 1.0, namely, between 0.1 and 1.0, or between 0.1 to 0.5 times a rotational speed of the driveline, e.g., the rotational speed of the rotatable component with respect to the other component. Particularly in this range, potentially critical signatures may be detected. A frequency that is synchronous with the rotational speed of the rotatable component corresponds to the rotational speed of the rotatable component relative to the other component (expressed in Hz). A frequency range adjacent synchronicity may range from 0.6 to 1.0 times the rotational speed of the rotatable component.

According to an aspect, an engine is provided, e.g. for an aircraft, in particular a gas turbine engine, an electrical engine or a hybrid-electrical engine. The engine comprises the system according to any aspect or embodiment described herein. The engine provides propulsion. Therein, said driveline may drive a compressor, fan and/or propeller. It is worth noting that the precise and early detection of vibrations due to gap-dependent forces by the system are particularly beneficial in aircraft engines, because of the very high demands regarding failure safety. As noted before, the engine may be a gas turbine engine, and it may comprise an engine core comprising a turbine, a compressor, and a core shaft connecting the turbine to the compressor; and a fan located upstream of the engine core, the fan comprising a plurality of fan blades; wherein, optionally, an epicyclic gearbox receives an input from the core shaft and outputs drive to the fan so as to drive the fan at a lower rotational speed than the core shaft. It may be provided that the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

According to an aspect, a method for detection of vibration at a driveline including a rotatable component rotatable about a rotational axis relative to another component is provided, wherein a fluid is arranged in a clearance between the rotatable component and the other component, wherein a rotor of an electrical machine is arranged to drive and/or to be driven by the driveline. The rotatable component is external of the electrical machine and the rotor of the electrical machine, and the rotatable component are in operative connection. The method comprises the steps of: providing, by means of the electrical machine, signals indicative for a property of a motion and/or a force between the rotor and the stator and/or a torque applied on the rotor; and determining, by an analysis unit receiving the provided signals, a vibration signature of the rotatable component with respect to the other component based on the signals. The method may be adapted in accordance with the system of any aspect or embodiment described herein, and it may use the system. The vibration signature is detected within a predetermined frequency range, wherein the predefined frequency range is between 0.1 and 1.0 times the rotational speed of the rotatable component with respect to the other component.

Optionally, the signals indicative for a motion and/or of a force between two components and/or a torque applied on one or more component(s) of the driveline at different points in time are provided; by the analysis unit receiving the signals, a property of the vibration signature within a predetermined frequency range is determined based on the signals at the different points in time; and, optionally, generating a command based on a comparison of the property of the vibration signature with a predetermined threshold. The method may be adapted in accordance with the system of any aspect or embodiment described herein, and it may use the system.

As noted elsewhere herein, the present disclosure relates to a gas turbine engine. Such a gas turbine engine may comprise an engine core comprising a turbine, a combustor, a compressor, and a core shaft operatively connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Embodiments will now be described by way of example only, with reference to the schematic Figures, in which:
- Figure 1: is an aircraft having a plurality of gas turbine engines;
- Figure 2: is a sectional side view of a gas turbine engine;
- Figure 3: is a close up sectional side view of an upstream portion of a gas turbine engine;
- Figure 4: is a partially cut-away view of a gearbox for a gas turbine engine;
- Figure 5: shows a journal bearing with a rotatable component and another component;
- Figures 6 and 7: show a squeeze film damper of the gas turbine engine;
- Figure 8: shows a turbine stage of the gas turbine engine;
- Figures 9 and 10: show an electrical machine;
- Figure 11: shows a system of the gas turbine engine for vibration detection;
- Figures 12A to 12E: show vibration spectra at different points in time;
- Figure 13: shows a diagram with determined values and different thresholds and intervals for the values versus time;
- Figure 14: shows a diagram of amplitude ratios versus time; and
- Figure 15: shows a method for detection of vibration at a driveline.

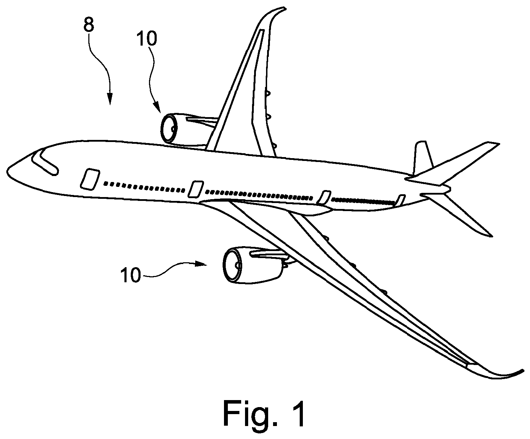

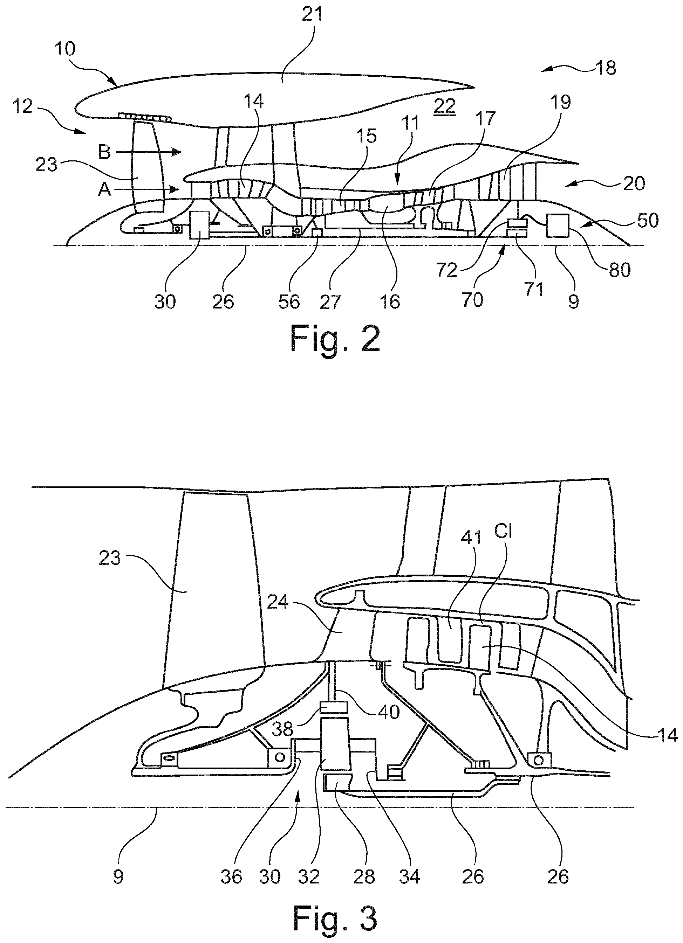

Figure 1 shows an aircraft 8 in the form of a passenger aircraft. Aircraft 8 comprises several (i.e., two) gas turbine engines 10 in accordance with Figures 2 and 3, and, optionally, an APU.

Figure 2 illustrates a gas turbine engine 10 having a principal rotational axis 9. The gas turbine engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 3. The low pressure turbine 19 (see Figure 2) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

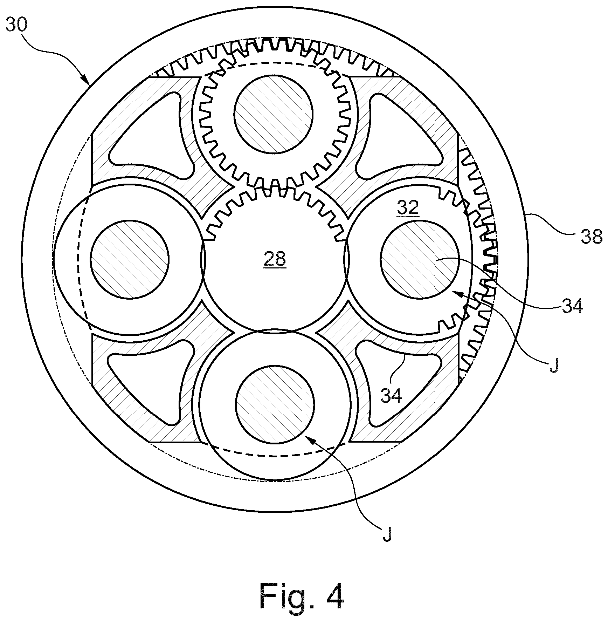

The epicyclic gearbox 30 is shown by way of example in greater detail in Figure 4. Each of the sun gear 28, planet gears 32 and ring gear 38 comprise teeth about their periphery to intermesh with the other gears. However, for clarity only exemplary portions of the teeth are illustrated in Figure 4. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

Each planet gear 32 is a rotatable component, and each pin of the planet carrier 34 serves as another component that forms a journal bearing J with the corresponding planet gear 32.

The epicyclic gearbox 30 illustrated by way of example in Figures 3 and 4 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 3 and 4 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 3 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 3. For example, where the gearbox 30 has a star arrangement (described above), the skilled person would readily understand that the arrangement of output and support linkages and bearing locations would typically be different to that shown by way of example in Figure 3.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 2 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 2), and a circumferential direction (perpendicular to the page in the Figure 2 view). The axial, radial and circumferential directions are mutually perpendicular.

As particularly shown in Figure 2, the gas turbine engine 10 comprises a system 50 for vibration detection. The system 50 generally comprises at least one pair of a rotatable component and another component rotatable with respect to one another being part of a driveline. In the present example, the gas turbine engine comprises a plurality of such pairs of components, e.g., each of the planet gears 32 that are rotatable relative to the planet carrier 34 and the corresponding pins, the low-pressure compressor 14 and the low-pressure turbine 19, each of which being rotatable with respect to the nacelle 21, and a squeeze film damper 56 as a damping bearing for the shaft, to just name a few. The driveline comprises a plurality of components that are operatively connected such that when one component of the driveline rotates (with respect to a given reference, e.g., the nacelle 21), the other components of the driveline are also rotated (with respect to the reference). Vibrations of one component of the driveline may be propagated to other components of the driveline.

The system 50 further comprises an electrical machine 70. The electrical machine 70 may be regarded as a part of the driveline. In the present example, the electrical machine 70 is an electric motor that can convert electrical energy into motion, and that can also be used as a generator to convert motion into electrical energy. The electrical machine 70 comprises a stator 72 being fixed with respect to the nacelle 21, and a rotor 71. The rotor 71 is rotatable with respect to the stator 72. The rotor 72 is fixed to the shaft 26. Thus, the electrical machine 70 can drive (and be driven by) the low-pressure compressor 14 and the fan 23. It is worth noting that the electrical machine 70 could alternatively be operatively connected to the interconnecting shaft 27 or, e.g., any other shaft of the core engine. Stated more generally, the electrical machine 70 is arranged to drive and/or to be driven by other parts of the driveline.

Further, the electrical machine 70 is adapted to provide signals indicative for a motion and/or a force and/or a torque between the rotor 71 and the stator 72. These signals may be provided with or without pre-processing by an optional control unit of (and/or connected with) the electrical machine 70. Alternatively, the signals may be provided by simply connecting electrical cables to one or more coils of the electrical machine 70. In addition a dedicated vibration sensor adapted to provide signals indicative for a motion and/or a force between two components of the driveline (particularly at different points in time) may be provided.

The system 50 further comprises an analysis unit 80 adapted to receive the signals (from the electrical machine 70 and the vibration sensor; there can be one or more electrical machine(s) and/or one or more magnetic bearing(s) distributed in series or parallel connection to one or more rotatable components) and to determine a vibration signature of the rotatable component (e.g., the low-pressure compressor 14 or the planet gear 32 with respect to the other component (e.g., the nacelle 21 or the planet carrier 34) based on the signals, and a property of the vibration signature. Optionally, the analysis unit 80 determines one or more vibration signatures (and, optionally, properties thereof) for one, or more than one rotatable component. To this end, for each rotatable component, the received signals or data derived therefrom may be normalized by the analysis unit 80 by the respective rotational speed of the rotational component. The analysis unit 80 is connected to the electrical machine 70 and, if present, to the vibration sensor(s) and/or to a control system of or for the electrical machine 70 and the vibration sensor(s) so as to receive the signals, e.g., by means of a connection via electrically conductive signal cables or (any kind of) a communicative connection.

The system 50 allows an early detection of an engine alignment degradation by monitoring gap-dependent vibration and unbalanced magnetic forces in the electrical machine, e.g., electrical drive. In particular in aircraft engines, a deterioration of the initial alignment of rotors, for instance caused by changes in radial and axial clearances or in angular misalignments between rotors and between rotors and stators (e.g., fixed relative to the nacelle 21) is known to drive vibrations.

In particular, gap-dependent forces are developed when the gaps between rotors and stators loose the circumferential symmetry and as a result of this, an unbalanced air pressure, oil pressure or magnetic flux exert a resultant force onto the rotors (i.e., rotatable components) that may cause vibrations and instable orbits in turbines, compressors, oil seals, oil bearings, squeeze film dampers and electrical drives (e.g., Alford forces in turbines, Wachel forces in compressors, oil whirl and whip in journal bearings, unbalanced magnetic pull in electrical drives).

Since vibrations generated by the gap-dependent forces appear particularly in frequency ranges that are known and/or can be determined by a baseline measurement, calculation and/or a simulation, and present a high sensitivity to small changes in the rotor alignment, they are good early indicators of loss of alignment and mechanical deterioration, such as an unwanted increase of clearances. Given a certain tip clearance (for turbines and compressors), rotor shaft and housing design, the gap-dependent vibrations appear in frequency ranges that are known or can be determined. Therefore, to detect and monitor frequency and magnitude trends in the gap-dependent vibration that appear as rotor orbits superimposed to the rotor spin represent a good early indicator of a deterioration that causes a loss of rotor alignment in rotating machinery, in particular in an aircraft engine. The analysis unit 80 may store predetermined frequencies (in particular as a function of the corresponding speed of the rotatable component) and search for vibration signatures at these frequencies.

While it is possible to use signals of dedicated vibration sensors for the analysis of the analysis unit 80, e.g., of accelerometers, it is particularly helpful to use signals from an electrical machine in the driveline, e.g., the electrical machine 70, to provide the signals for the analysis. When an electrical machine, e.g., drive, is connected to the rotatable component(s), unbalanced magnetic forces may be induced into the electrical drive as a consequence of asymmetrical gap-dependent forces being generated on the other engine rotatable component(s) because of a loss of alignment somewhere in the driveline. In electrical machines, such asymmetrical gap-dependent orbits and vibrations may be isolated and amplified by dedicated electrical circuits and coils, so that that the electrical machine may work as a vibration sensor highly sensitive to the gap-dependent orbits and vibrations of the other rotatable components. The system 50 may track frequencies, amplitudes and phases of the gap-dependent vibration in electrical or hybrid engines, and in auxiliary power units (APUs) using the capacity of the electrical machine to separate and amplify the movements between rotatable components and the corresponding other components generated by gap-dependent forces acting on the engine driveline.

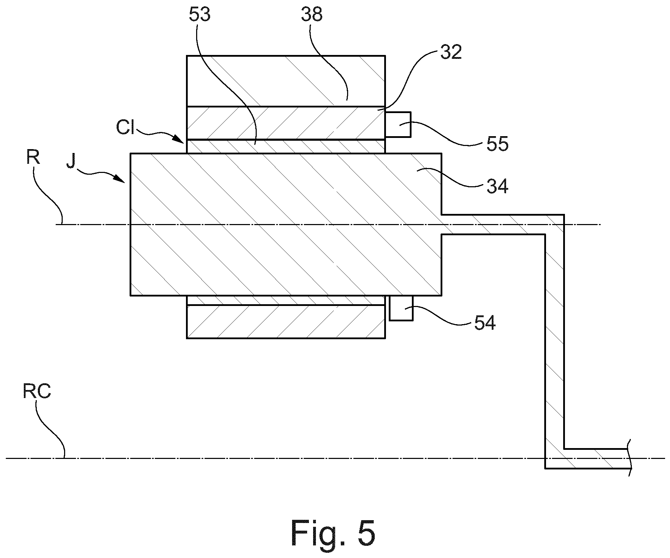

A further option is to use the electrical machine 70 as a vibration controller. The gap-dependent vibrations of components other than the electrical machine 70 may be actively counteracted by means of the electrical machine 70. To this end, the analysis unit 80 may provide control signals (based on the analysis of the vibration signatures) to the electrical machine 70 to provide voltages and/or currents to the coils based on the control signals. In addition, one or more signals can be sent to the engine controller to actuate other regulations to minimize vibration and/or restore performance levels to nominal (e.g., restore turbine or compressor efficiency changing the operational point). Figure 5 shows a simplified sketch of a journal bearing J of the gearbox 30. The journal bearing J is formed by planet gear 32 as rotatable component and the planet carrier 34 as other component. The planet gear 32 is arranged so as to be rotatable about a rotational axis R relative to the planet carrier 34.

According to Figure 5, the planet carrier 34 (more precisely, a pin of the planet carrier 34) is inserted in a receptacle of the planet gear 32. The planet gear 32 thus encompasses the planet carrier 34 pin.

The planet gear 32 has outer teeth that mesh with the ring gear 38. The ring gear 38 extends coaxially around a central axis RC. The planet carrier 34 is mounted rotatable about the central axis RC (e.g., with respect to the ring gear 38).

Between the planet gear 32 and the planet carrier 34 there is a clearance Cl. In other words, the inner diameter of the planet gear 32 receptacle is larger than the outer diameter of the planet carrier 34 pin. The clearance Cl is filled up with a fluid. The fluid acts a lubricant. In the present example, the fluid is an oil 53.

An oil system supplies the oil 53 to the journal bearing J. The oil system comprises an oil tank and an oil pump, or is connected to an oil tank and/or an oil pump. The oil system is generally adapted to adjust at least one property of the oil 53 in the clearance Cl, in particular the pressure and, optionally, the temperature of the oil 53 in the clearance Cl. For this purpose, at least one valve, more precisely, a servo valve, may be adjustable to control the pressure of the oil 53 in the clearance Cl, but also other means are conceivable for this purpose. The oil system may further comprise an oil cooler which is adjustable to control the temperature of the oil 53 in the clearance Cl.

The journal bearing J further comprises a speed sensor 54 as a means to determine the rotational speed of the planet gear 32 relative to the planet carrier 34 (this may be provided to the analysis unit 80), and, in this not inventive example, at least one vibration sensor 55 to measure a vibration of the planet gear 32. The vibration (e.g., of an orbiting motion) of the planet gear 32 can be measured by one or more sensor(s) grounded (mounted on a fixed frame) or by one or more sensors rotating with the planet gear 32 (e.g., via a telemetry system). Alternatively or in addition, the at least one vibration sensor 55 may be or comprise at least one accelerometer or a non-contact sensor to measure vibration of rotating parts. The one or more accelerometers may, e.g., be mounted on the planet carrier 34.

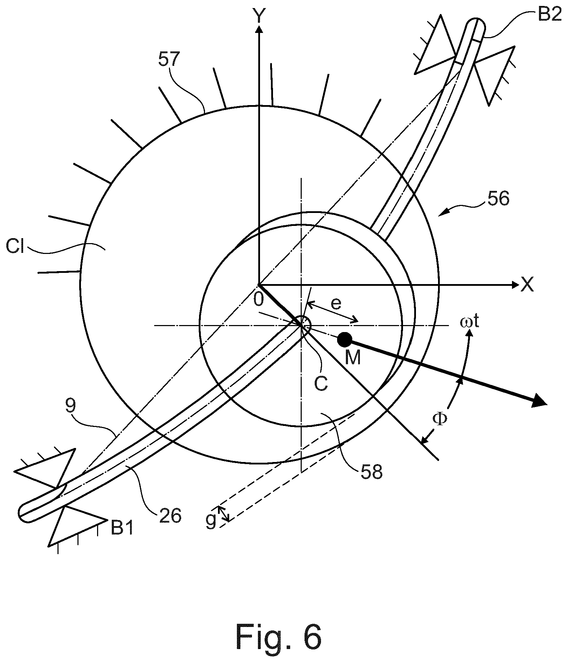

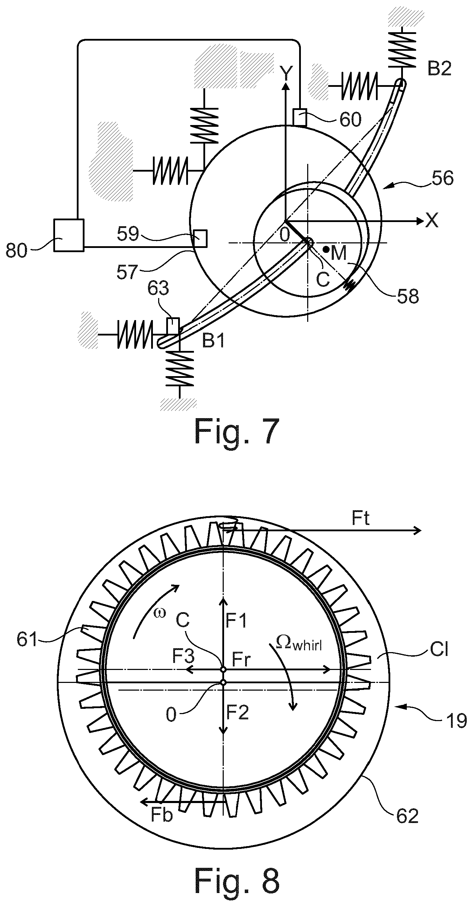

Gap-dependent forces may occur in the clearance Cl of the journal bearing J, and may lead to strong vibrations due to instabilities (e.g., oil whirl or whip) of the oil film in the clearance Cl. Correspondingly, also other elements in gas turbine engines and more generally, in rotating machinery can exhibit similar effects, for example squeeze film dampers, as will be described in more detail with reference to Figures 6 and 7. Also between the blade tips of the low-pressure compressor 14 (and correspondingly for other stages) and the surrounding casing of the nacelle 21 there is a clearance Cl, see Figure 3. This clearance is also filled with a fluid, in this case air. Also the air in the clearance Cl at the blade tips may become unstable in certain operating conditions what can result in gap-dependent forces. These forces are often referred to as Wachel forces in compressors. Similarly, corresponding forces are referred to as Alford forces in the case of turbines. This will be described further below with reference to Figure 8 in an example of a turbine stage.

Figure 6 shows the squeeze film damper 56. Squeeze film dampers are lubricated elements providing viscous damping in mechanical systems. Here, the squeeze film damper 56 is mounted at the shaft 26 of the gas turbine engine 10, as one of many possible applications. The shaft 26 is rotatably mounted at bearings, wherein Figure 6 schematically shows two bearings B1, B2 by way of example. The squeeze film damper 56 is arranged between the bearings B1, B2, as an example. In the figure, the squeeze film damper 56 is shown enlarged for illustration.

The squeeze film damper 56 comprises a housing 57 and a rotor 58. The housing 57 is fixed, e.g., with respect to the nacelle 21. The rotor 58 is rotatably arranged in the housing 57 and has a geometrical center C. The housing 57 is aligned with the axis of rotation of the shaft 26 which in the present example is the principal rotational axis 9.

This is indicated in Figure 6 with the origin 0 of coordinates x, y, which is the location of the center of the housing 57. In a balanced, symmetric state the shaft 26 is aligned with the principle rotational axis 9 (and extends through the origin 0), however, due to asymmetric forces, the shaft 26 may be bent, as shown in an exaggerated manner in Figure 6. Thus, center C of rotor 58 is displaced from origin 0 (while in a balanced state, center C of rotor 58 would be at the origin 0. Thus, the clearance Cl around the rotor 58 between the outer surface of the rotor 58 and the inner surface of the housing 57 is no longer symmetric, but asymmetric. A smallest gap g having the minimal width is indicated in Figure 6. The asymmetric gap width may lead to strong vibrations, e.g., by generating fluid (e.g., oil) film whirl or whip.

There are different possible reasons that may lead to an asymmetric arrangement of the rotor 58, one of which being a center of gravity M of the rotor 58 (and/or of the shaft 26) which is radially offset from the geometric center C. In Figure 6 this is indicated by an eccentricity e of the rotor 58 center of gravity M. A rotation (with speed w) of the rotor 58 in the housing 57 leads to a centrifugal force indicated with an arrow in Figure 6 and being oriented at an angle Φ relative to the smallest gap g location with respect to the geometric center C. Other possible reasons are vibrations from other components acting on the squeeze film damper 56, a tilting of the shaft 26, and so forth.

Figure 7 shows the squeeze film damper 56 of Figure 6, wherein springs are drawn for illustration to show that the bearings B1, B2, the mounting of the housing 57 and the oil film have elastic properties that influence the dynamic behavior of the squeeze film damper 56. Measurements and/or simulations may be performed to determine the dynamic behavior (e.g., the frequency spectrum, in particular at various different rotational speeds) of the squeeze film damper 56. The results thereof may be used to determine baseline thresholds for comparison in a later monitoring of the squeeze film damper 56 in use.

Further, Figure 7 shows two possible arrangements of vibration sensors 59, 60, 63. A vibration sensor 59 may be mounted on the inner side of the housing 57 and/or a vibration sensor 60 may be mounted on the outer side of the housing 57 and/or a vibration sensor 63 may be mounted at a bearing B1, B2. The sensor 59, 60, 63 or the sensors 59, 60, 63 is/are connected to an analysis unit 80 such that the analysis unit 80 may receive signals therefrom. Optionally, the analysis unit 80 is the analysis unit 80 shown in Figure 2.

Figure 8 illustrates a turbine stage of the low-pressure turbine 19 having a plurality of blades 61. The blades 61 have outer tips and are surrounded by a casing 62 (fixed to the nacelle 21). Between the blade 61 tips and the casing 62 there is a clearance Cl. However, due to imbalances, e.g. an eccentricity of the shaft 26 or turbine 19 mass from the geometric center C, or other sources of imbalances, the geometric center C of the turbine stage is offset from the origin 0 which is the geometric center of the casing 62. Thus, the blade 61 tip clearance Cl is unequal for the different blades 61.

However, blades 61 with a smaller tip clearance Cl are more efficient than those with a large clearance Cl. Thus, more work is extracted by the blades 61 with smaller tip clearance Cl, and larger force Ft acts on the blades 61 with a smaller tip clearance Cl, while a smaller force Fb acts on the blades 61 with a larger tip clearance Cl. The resultant side force Fr, which is called the Alford force, drives the turbine stage (more generally: the rotor) in the direction of rotation what may lead to whirling. Without sufficient damping, such forces could amplify the displacement of the shaft 26.

Figure 8 further depicts as F1 the centrifugal force acting on the turbine stage, as F2 the elastic restoring force and as F3 an external damping force.

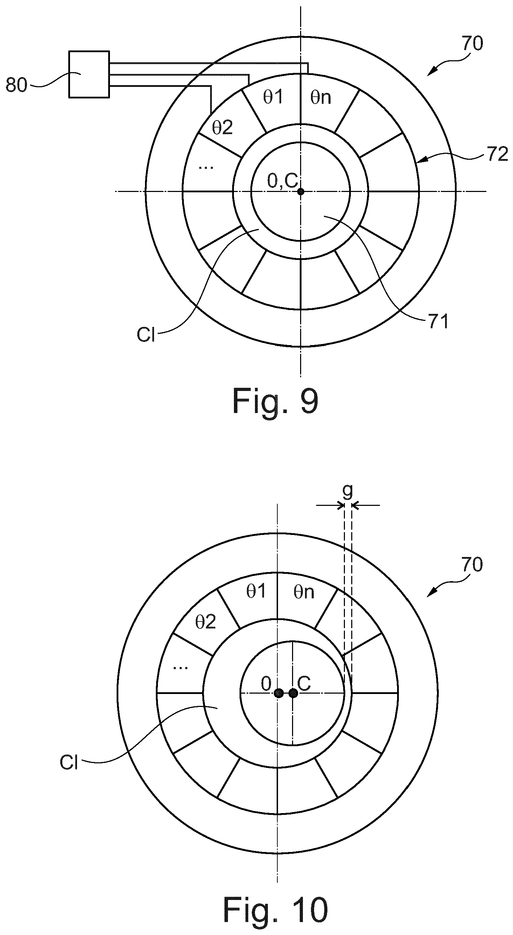

Figures 9 and 10 show the electric machine 70 with the stator 71 and the rotor 72. While Figure 9 shows the rotor 71 with its geometric center C coaxial with the geometric stator center 0, Figure 10 shows an eccentric arrangement. The clearance Cl between the rotor 71 and the stator 72 is non-uniform in Figure 10, and the smallest gap g is indicated again.

The stator 72 has a plurality of coils θ1-θn to drive the rotor 71 (that may have permanent or electric magnets).

Unbalanced magnetic pull is usually associated with non-uniform induction due to winding faults or rotor eccentricity conditions. Due to the non-uniform clearance Cl, the magnetic flux in the air gap is also non-uniform and this can be measured by the analysis unit 80 that may be connected to the coils θ1-θn and/or to a control system of the electric machine 70 so as to receive signals therefrom. For example, magnetic induction in the coils θ1-θn may be measured, e.g., by measuring voltages and/or currents at the coils θ1-θn. For example, pairs of opposing coils θ1-θn may be compared.

Thus, the electric machine 70 can detect an unbalance of the rotor 71. However, since the electric machine 70 is operatively connected to other parts of the driveline of the engine 10 core shown in Figure 2, it is also sensitive to unbalances from rotatable components of the driveline. Thus, the electrical machine 70 can be used as a vibration sensor. Since it may directly sense vibrations in the driveline, rather than by means of external sensors, a particularly high precision is possible without the need of any further sensors. To this end, the electrical machine 70 may provide signals indicative for the unbalanced magnetic pull to the analysis unit 80, or it may pre-process unbalanced magnetic pull signals and provide processed signals, e.g. frequency spectra to the analysis unit 80.

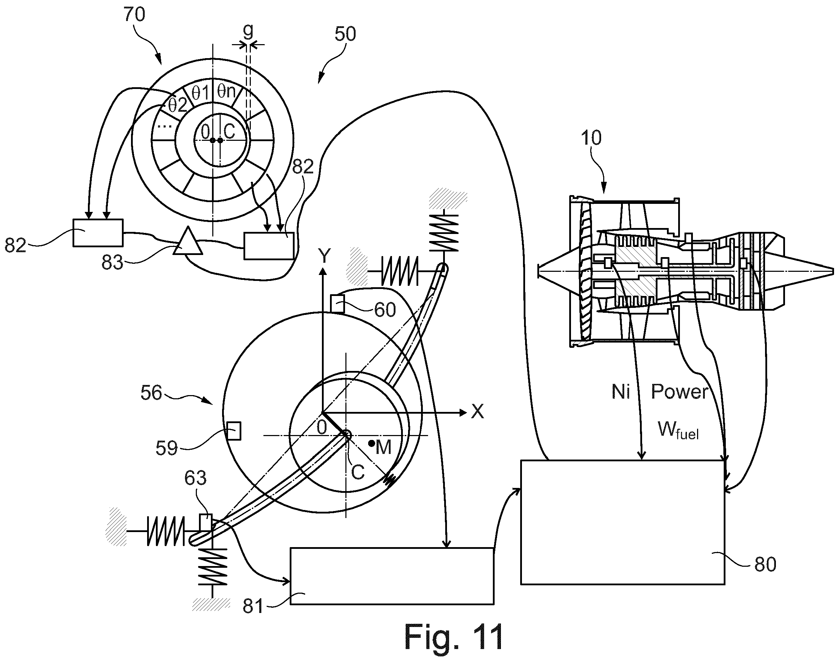

Figure 11 shows the various components of the exemplary system 50. Signal acquisition units 82 receive signals from the coils θ1-θn of the electrical machine 70 and, optionally, pre-process these signals. The signals of the coils θ1-θn are then provided to a signal concentrator 83 which provides these received signals, or provides signals determined based on the received signals, to the analysis unit 80. Optionally, signal acquisition units 82 and/or signal concentrator 83 are included in analysis unit 80. Further, optionally, also vibration sensor 59, 60, 63 signals are provided. In the present example these signals are received by a conditioning unit that performs conditioning on the sensor signals and provides conditioned signals to the analysis unit 80. In other examples, the analysis unit 80 directly receives signals from one or more vibration sensors 59, 60, 63. Further, the analysis unit 80 receives other data from the gas turbine engine 10, from sensors and/or a control system thereof, e.g., rotational speed of the shaft 26 or of the shafts 26, 27, power, fuel consumption, one or more temperatures, one or more pressures and/or other data.

It is worth noting that the analysis unit 80 may be one single device, or it may comprise a plurality of communicatively coupled devices that may be displaced from one another.

In the electrical machine 70 the electrical effects that are generated by a shaft movement induced by gap-dependent forces can be amplified to provide a gauge function that may be embedded within the drive itself, and that can be tuned to provide a highly sensitive measure of the gap variation of other rotatable components. It is worth noting that gap variations that generate gap-dependent vibrations are directly connected to the shaft clearances in the moment in which the measure takes place. This allows an optimized early detection of a loss of alignment or deterioration in the engine driveline. Detecting and monitoring gap-dependent vibrations and compare their trends with nominal baseline vibration levels (from look-up tables, a pass-off test and/or FEM simulations) by means of the analysis unit 80 can keep under control a progressive deterioration of a broad range of mechanical wear or damage resulting in a loss of the initial rotor alignment. As an example, after the engine 10 assembly, the positions of the engine 10 rotatable components, i.e., the engine alignment, is determined (by measurement and/or by determination based on the design, the manufacturing tolerances and, optionally, balancing and alignment procedures).

The analysis unit 80 analyzes the received signals at different points in time. In the present example, at each of a plurality of points in time, the analysis unit 80 extracts a frequency spectrum from the signals obtained from the electrical machine 70 and/or from the vibration sensors 59, 60, 63. Further, the analysis unit 80 normalizes the respective frequency spectrum by rotational speed of the rotatable component 14, 19, 32, 58 that is to be monitored. Optionally, this step is performed for a plurality of different rotatable components 14, 19, 32, 58, when their rotational speeds are different. Note that the rotational speed(s) of the rotatable component(s) may change between the different points in time t1-t5.

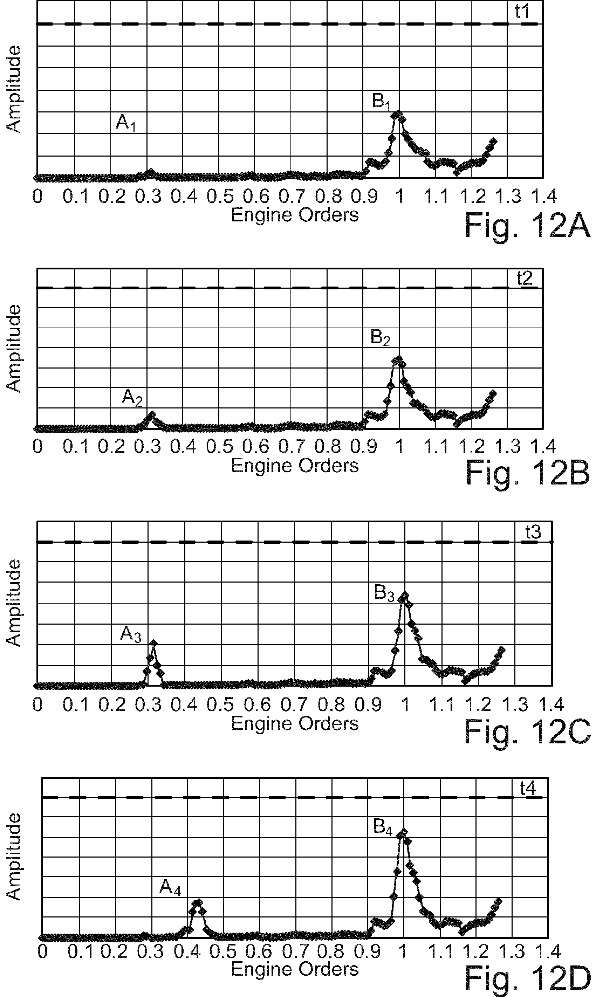

Figures 12A to 12E show corresponding normalized frequency spectra for the example of the rotor 58 of the squeeze film damper 56 at different points in time t1 to t5. Therein, the diagrams show the amplitudes versus the frequency in engine orders, i.e., normalizes by the shaft 26 speed. Thus, a peak at engine order 1 corresponds to a vibration that is synchronous with the shaft 26 rotational speed.

The analysis unit 80 searches for signatures in the spectra of the received signals. Particularly, the analysis unit 80 searches for signatures in a predetermined frequency range of 0.1 to 0.5 engine orders. For example, the signature in the spectra may be one or more peaks. Thus, the analysis unit 80 may use a peak finder to find peaks in the spectra, e.g., local or global maxima. Also an analysis of frequency combinations from different shafts, such as beating frequencies and sidebands, can be carried out for cross shaft vibration monitoring.

Figure 12A shows a reference spectrum at time t1 denoting a signature A1 in the range of 0.1 to 0.5 engine orders. This vibration peak can represent the amplitude in one direction of a sub-synchronous orbit generated by a gap-dependent force that is appearing because of a loss of alignment in the rotor shaft. A1 is at about 0.32 engine orders. Further, signature B1 is denoted at engine order 1. The amplitude of the first engine order may be used to detect a loss of alignment and/or augment of eccentricity. The reference spectrum of the point in time t1 may serve as a baseline. For example, the reference spectrum has been acquired after production of the gas turbine engine 10. A dashed horizontal line indicates an alarm threshold active on the magnitude of the first engine order. When the vibration at a frequency exceeds the threshold an alarm is triggered to initiate counter measures.

Comparing the spectrum obtained at time t2 shown in Figure 12B to the reference spectrum at time t1 shown in Figure 12A it can be seen that the A signature (indicated as A2) has an increased amplitude. The analysis unit 80 determines at least one property, in the present example several properties, of the signature. Here, the analysis unit 80 determines the properties of all signatures in the predetermined range of 0.1 to 0.5 engine orders. In this example, the analysis unit 80 determines amplitude and the frequency as properties of the signatures. Between A1 and A2, the amplitude slightly increased and the frequency remained substantially unchanged. Also the B signature shows a slightly increased amplitude, compare B1 and B2.

However, at time t3 shown in Figure 12C, the A signature has an amplitude that strongly increased compared to A1, and has a much larger relative increase compared to B3/B1.

At time t4 shown in Figure 12D, the amplitude of the A signature decreased compared to time t3, compare A4 to A3, and the B signature has a further increased amplitude, compare B4 to B3. In addition, the A signature orbit has a changed frequency, note A4 at about 0.43 engine orders due to a stiffer reaction of the fluid trapped in a smaller gap onto the rotor(s). The smaller gap gives higher pressure that in turn gives a stiffer reaction against rotor vibration (e.g., in radial direction, such as a precession orbit). In turbine rotors and compressors this jump in the sub-synchronous orbit frequency may indicate that a failure condition is approaching. It is worth noting that the amplitude of B4 is still clearly below the alarm threshold. Gap-dependent vibrations commonly have frequencies that change with the gap width, usually showing a frequency increase as the gap diminishes. The reason for this is mainly the fluid flow being accelerated faster within a narrower gap. An evaluation of the trends of the frequency of a vibration signature versus time may thus provide an early indication of an unwanted change in the engine alignment that may quickly deteriorate. This allows to enable optimized planned maintenance protocols and activate a vibration controller in order to maintain the required level of structural integrity throughout the operative life of the engine and reduce service costs. The analysis unit 80 is adapted to identify, separate and monitor vibrations generated by gap-dependent orbits and/or vibrations. From the amplitude of gap-dependent vibration and/or orbit by means of FEM or a look-up table it is possible to evaluate the loss of alignment for a given design (and vice versa). Further, FEM (finite element method) and/or look-up tables can provide evaluation of the corresponding force by means of calculation (e.g., rig experiment with load cell or nonlinear FEM simulation). For this, different types of vibration sensors located on the engine may be used, such as accelerometers, dynamic pressure probes, strain gauges, proximity probes etc., but particularly precise can be an alternative or additional (intrinsic) measurement using the electrical machine 70. The analysis unit 80 may relate the vibrations to the loss of alignment or engine deterioration, particularly by comparison with a baseline within the design limits, for instance obtained at an engine pass-off test. In addition, also detrimental vibration instability trends provoked by the gap-dependent forces themselves may be identified by the analysis unit 80, and avoided during engine operations.

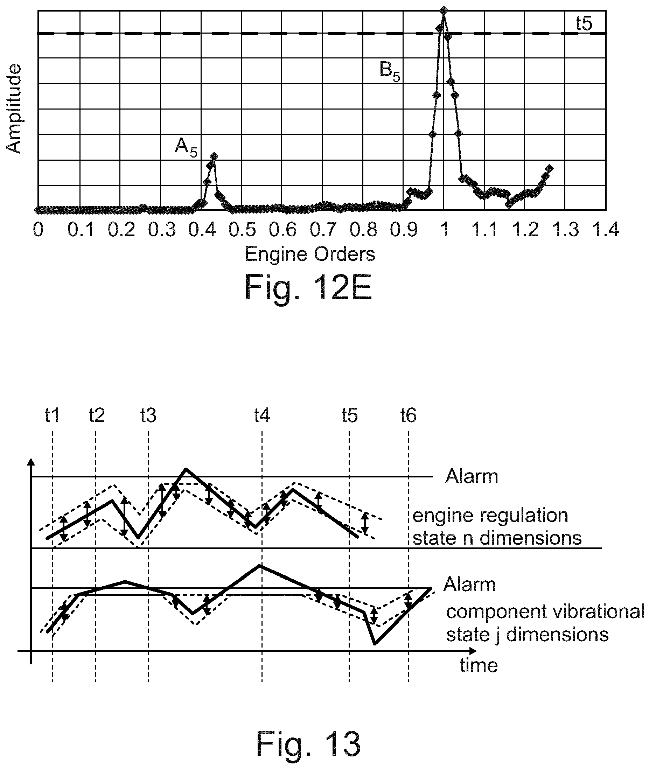

At time t5 shown in Figure 12E, the A signature has the same frequency as at time t4 and a slightly increased amplitude, compare A5 to A4. However, the B signature now exceeds the alarm threshold. The alarm threshold is set such that under normal conditions an uninterrupted operation is ensured, but amplitudes close to the threshold or even beyond may already result in an increased wear of several parts of the engine, and may also lead to uncomfortable vibrations in the cabin in case of an aircraft engine. The system 50 described herein allows to detect incoming fluid (oil, air, etc.) instabilities even before such large amplitudes actually are built up.

When a fluid in a clearance, such as oil in the journal bearings J or squeeze film damper 56, or the air in the compressor or turbine stages becomes instable, it creates specific changes of the properties of vibration signatures. The analysis unit 80 may further determine the ratio of the amplitudes (or another property) of the A and B signatures at the points in time t1 to t5. The analysis unit 80 may store, e.g., in look-up tables and/or in FEM plots, predetermined changes, thresholds or other values to compare with for signatures, particular for those in the predetermined frequency range of 0.1 to 0.5 engine orders (where gap-dependent forces particularly show). The analysis unit 80 is then adapted to compare extracted properties of signatures with these values to determine whether a gap-dependent vibration sets in and, optionally to provide a command, e.g., to initiate counter measures. For example, a sudden increase of the amplitude and/or a sudden change of the frequency of a signature may be such an indication.

Optionally, and particularly in the case of a gas turbine engine 10 application of the system 50, the analysis unit 80 is adapted to receive and analyze two groups of variables in parallel, wherein each of the groups of variables may be processed in the form of a vector.

The first group (or vector) has a plurality of n variables and may include at least two or all of the following: one or more shaft speeds, one or more temperatures, a fuel intake, variable vane regulations, throttle positions, one or more pressures, one or more torques, a power, a true air speed, an altitude, one or more currents and one or more charge storage levels. The n variables may be chosen in order to define the power regulation condition that may be affected by a malfunctioning of one or more engine components. The first group of variables describes an engine regulation state.

The second group (or vector) has a plurality of j variables, may be based on the received sensor signals, and may include at least two or all of the following: amplitude, frequency and phase of the absolute vibration of the rotatable component as measured in a fixed frame, and/or of relative vibration as measured between two rotatable components. These variables may be measured in a plurality of locations and/or in radial, tangential and axial direction, and at one or more rotatable components of one or more (e.g., parallel) rotor shafts and/or of one or more drivelines (e.g., in the same engine or power plant). The second group of variables describes a rotatable component vibrational state.

It is worth noting that the analysis unit 80 may receive the first and/or second groups of variables, or, more general, receive signals from the sensor(s) on a continuous or on a periodic basis. Further, the analysis unit 80 may analyze the first and/or second groups of variables, or, more general, analyze signals from the sensor(s) in response to the occurrence of predefined trigger events and/or in intervals.

The analysis may comprise a processing of the measured properties of the vibration signatures, and a comparison with baseline ranges (e.g., alarms and/or thresholds which generate different maintenance protocols). The comparison of the measured properties (in particular in the form of a vector) may be performed with a corresponding baseline, e.g., obtained from a look-up table. Optionally, a look-up table used by the analysis unit 80 for comparison with the vibration signature properties (vector) may cross-correlate different parameters, in particular for cases where not all parameters can be measured. Thus, missing parameters can be extrapolated.

Figure 13 shows a diagram wherein the upper solid line indicates the value of an engine regulation state variable of the first group at various points in time between t1 and t6, and the lower solid line indicates a value of a rotatable component vibrational state variable at the various points in time between t1 and t6. Around both solid lines, an interval is indicated by dashed lines. This intervals define the normal operational status. For example, the interval of the value of the rotatable component vibrational state may depend on the value of value of one or more engine regulation state variables. A value outside of the interval may trigger an alarm and/or maintenance actions, see at t5 for the upper curve, and between t5 and t6 for the lower curve. For both variables a corresponding horizontal line indicates an alarm threshold. An exceedance triggers an alarm, see between t3 and t4 for the upper curve, and between t2 and t3 and at t4 for the lower curve.

For the analysis of the received vibration signals, the analysis unit 80 is adapted to perform a frequency-domain analysis. In this regard, an FFT may be applied on the received signals from the one or more vibration sensors 55 and the electrical machine 70. Therein, the analysis unit 80 may determine whether or not any signals (e.g., above a predefined threshold) are present in the range of 0.1 to 0.5 or 0.45 times the rotational speed of the rotatable component.

Optionally, a time domain trend analysis may be performed on the vibration signal. For example, an increasing amplitude may be determined, or a peakfinder algorithm may be performed to detect critical signals. Alternatively or in addition, an angular domain analysis may be performed on the vibration signal. Alternatively or in addition, a phase analysis may be performed. As an example the analysis unit 80 may determine a change of a phase of the vibration, because a change of the phase, in particular while the speed of the rotatable component is steady, may indicate an onset of a fluid film instability. As an example, the phase may perform an instantaneous change at a resonance which, in turn, may drive a fluid film instability.

In addition to the vibration sensor 55 signals, other parameters of the machine may be analyzed by the control system 56. For example, the machine is a gas turbine engine having one, two or three shafts, each driven by a respective turbine. The rotatable component may be driven by one of the shafts. Speed encoders for speeds of the shafts may provide signals to the analysis unit 80. In this case, a separate speed sensor may be omitted. Further, torquemeters measuring the torque of one or more of the shafts may provide torque signals to the analysis unit 80. Further vibration sensors for the gas turbine engine may also provide signals to the analysis unit 80. An engine power measurement result may be provided to the analysis unit 80. Other engine health parameters may be provided. Particularly, the rotatable component may be a part of the epicyclic gearbox for the fan of the gas turbine engine. A power loss in the gearbox may be determined and also provided as a signal to the analysis unit 80. The analysis unit 80 may receive one, more or all of the above signals. For the signals that the control system receives, additionally baseline condition values may be provided. Further, such baseline values may be provided versus an engine operating condition, such as speed, torque, flight altitude and/or atmospheric conditions. By means of these baseline conditions, the analysis unit 80 may refine its analysis.

The analysis unit 80 may analyze the vibration signals based on shaft-orders related misalignment and sidebands, bearing defect frequencies, blade passing frequencies, integer-speed-generated harmonic cross-shaft vibration, known natural frequencies (for components, modules and/or the whole engine), the gearmesh frequency, harmonics of the rotatable component, electrically generated harmonics, and/or subsynchronous orders related to gap-dependent vibration. The analysis unit 80 may store one or more of the latter for comparison with the received signals.

In general, the analysis unit 80 may determine, based on the determined vibration signature properties, whether or not there is any trend in a gap-dependent vibration. Further, it may determine whether there is any trend in non-subsynchronous vibration. If either is the case (alternatively, if both are the case) an alarm and or maintenance may be triggered by the analysis unit 80.

Optionally, the analysis unit 80 performs a phase analysis, particularly extract a phase lag or phase lead, e.g. between one or more vibration signatures and a fixed reference position on the rotatable component. The phase analysis may be carried out in particular on fluid film (key indicator) frequencies, alternatively or in addition on other harmonic and/or subharmonic frequencies that allow to define the position of the rotor.

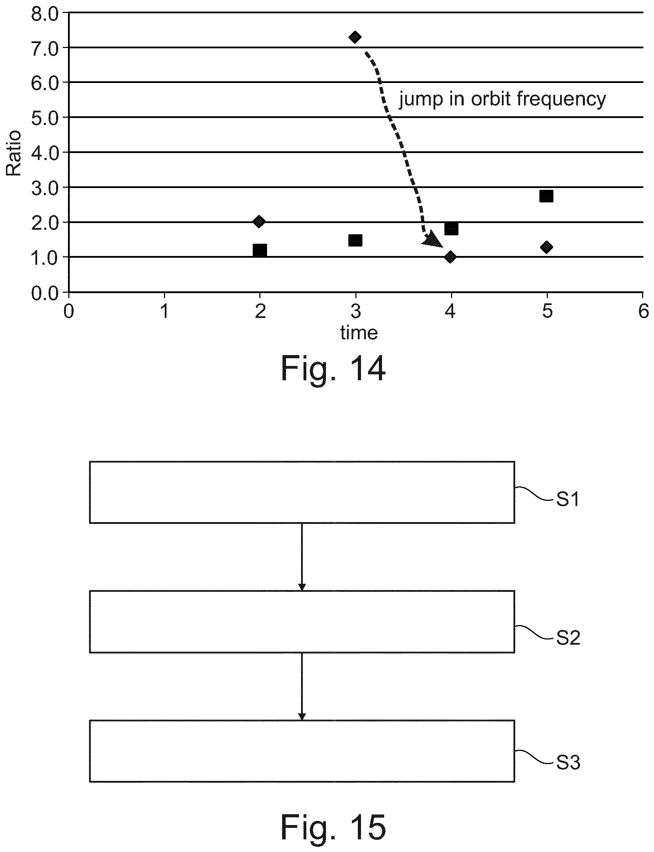

Figure 14 shows ratios of vibration signature properties (here: amplitudes) of vibration signatures at subsequent points in time. The analysis unit 80 may be adapted to determine ratios of properties (e.g., amplitudes) of vibration signatures at subsequent points in time in order to detect a misalignment of a component of the engine (or system 50), and, optionally, to generate a command and provide the command to an active means of the system 50 and/or of another adjustable engine (or in general machine) component.

In Figure 14, the ratio of the A (diamonds) and B (squares) signature property at a certain point in time over the corresponding value at a preceding point in time is shown, i.e., Ai/A(i-1) and Bi/B(i-1), versus time. In this example, the property is the amplitude as shown in Figures 12A-12E. The (sudden) increase of the A signature property which is (much) stronger than the increase of the B signature property between the same points in time is detected by the analysis unit 80. Further, the analysis unit 80 detects the change of the frequency of the A signature between times t3 and t4. Based on the latter or based on that in addition to the change (in particular, increase) of the frequency of the A signature there is no substantial change of the amplitude (particularly due to the stiffness of the fluid) of the A signature (and/or that between the same points in time the amplitude of the B signature further increased) the analysis unit 80 may detect an onset on an instability in an early manner. Thus, it can be seen that the orbits and vibrations (sub-synchronous) that are generated by gap-dependent forces are more sensitive to a loss of alignment than the vibration related to rotor misalignment and of unbalance (at 1 engine order and multiple).

Figure 15 shows a method for detection of vibration at a driveline including a rotatable component rotatable about a rotational axis relative to another component, wherein a fluid is arranged in a clearance between the rotatable component and the other component. The method comprises the following steps.

Step S1: providing, signals indicative for a motion and/or of a force between two components 14, 21, 32, 34 of the driveline at different points in time, wherein an electrical machine 70 being part of the driveline is used as the sensor, the electrical machine including a rotor arranged to drive and/or to be driven by a part of the driveline.

Step S2: determining, by an analysis unit 80 receiving the provided signals, a vibration signature of the rotatable component 14, 19, 32, 58 with respect to the other component 21, 34, 59 based on the signals.

Step S3: generating a command based on a comparison of the property of the vibration signature with a predetermined threshold.

The method may use the system 50 described herein, and be adapted to perform steps described with reference to the system 50.

Various parameters have an impact on the onset of an unstable operation, particularly speed, but also load, oil viscosity, external vibrations, and a tilting of the rotatable component. When only amplitudes of a vibration of the rotatable component are monitored, in some cases the reaction time may be too slow and, e.g., when the speed is reduced or even stopped, the journal bearing could already be damaged. In addition, amplitudes per se may be not reliable enough for the detection of an oil film instability in some applications. It has turned out, however, that by monitoring specific predefined frequencies, in particular ranges of frequencies of vibrations of the rotatable component, it is possible to detect an onset of a fluid film instability in a very reliable and quick manner.

The invention is defined by the appended set of claims.

### List of reference numbers

- 8: airplane
- 9: principal rotational axis
- 10: gas turbine engine
- 11: engine core
- 12: air intake
- 14: low-pressure compressor
- 15: high-pressure compressor
- 16: combustion equipment
- 17: high-pressure turbine
- 18: bypass exhaust nozzle
- 19: low-pressure turbine
- 20: core exhaust nozzle
- 21: nacelle
- 22: bypass duct
- 23: propulsive fan
- 24: stationary support structure
- 26: shaft (input)
- 27: interconnecting shaft
- 28: sun gear
- 30: gearbox
- 32: planet gears
- 34: planet carrier
- 38: ring gear
- 40: linkages
- 50: system
- 53: fluid (oil)
- 54: speed sensor
- 55: vibration sensor
- 56: squeeze film damper
- 57: housing
- 58: rotor
- 59: sensor
- 60: sensor
- 61: blade
- 62: casing
- 63: sensor
- 70: electrical machine
- 71: rotor
- 72: stator
- 80: analysis unit
- 81: conditioning unit
- 82: signal acquisition unit
- 83: signal concentrator
- A: core airflow
- B: bypass airflow
- B1, B2: bearing
- Cl: clearance
- J1: journal bearing
- R: rotational axis
- RC: central axis
- θ1-θn: coil

## Claims

1. A system (50) for vibration detection, comprising:
- one or more drivelines including a rotatable component (14, 19, 32, 58) rotatable about a rotational axis (9, R) relative to another component (21, 34, 59), wherein a fluid (53) is arranged in a clearance (CI) between the rotatable component (14, 19, 32, 58) and the other component (21, 34, 59);
- an electrical machine (70) having a rotor (71) and a stator (72) rotatable with respect to one another, the rotor (71) being arranged to drive and/or to be driven by a part of the driveline, the electrical machine (70) being adapted to provide signals indicative for a motion and/or a force between the rotor (71) and the stator (72) and/or a torque applied on the rotor (71), wherein the rotatable component (14, 19, 32, 58) is external of the electrical machine (70) and wherein the rotor (71) of the electrical machine (70) and the rotatable component (14, 19, 32, 58) are in operative connection; and
- an analysis unit (80) adapted to receive the signals and to detect a vibration signature of the rotatable component (14, 19, 32, 58) with respect to the other component (21, 34, 59) based on the signals, wherein the analysis unit (80) is adapted to detect the vibration signature within a predetermined frequency range, wherein the predefined frequency range is between 0.1 and 1.0 times the rotational speed of the rotatable component (14, 19, 32, 58) with respect to the other component (21, 34, 59).

2. The system (50) according to claim 1, wherein the signals are indicative for and/or based on asymmetric magnetic forces in the electrical machine (70).

3. The system (50) according to claim 1 or 2, wherein the electrical machine (70) comprises a plurality of coils (θ1-θn), wherein the signals are indicative for and/or based on differences among voltages and/or electrical currents of the plurality of coils (θ1-θn).

4. The system (50) according to any of the previous claims, wherein the rotor (71) of the electrical machine (70) and the rotatable component (14, 19) are fixedly connected to one another.

5. The system (50) according to any of the previous claims, wherein the analysis unit (80) is adapted to determine a property of the vibration signature based on the signals at the different points in time, and to generate a command based on a comparison of the property of the vibration signature with a predetermined threshold.

6. The system (50) according to claim 1, wherein:
- the electrical machine (70) is adapted to provide signals indicative for a motion and/or a force between two components (14, 21, 32, 34) and/or a torque applied on one or more component(s) (14, 21, 32, 34) of the driveline at different points in time; and
- the analysis unit (80) is adapted to receive the signals and to determine a property of the vibration signature within a predetermined frequency range based on the signals at the different points in time.

7. The system (50) according to any of the previous claims, wherein the analysis unit (80) is further adapted to generate a command based on a comparison of the property of the vibration signature with a predetermined threshold.

8. The system (50) according to any of the previous claims, wherein the property of the vibration signature comprises a frequency, phase and/or amplitude and/or at least one time history trend.

9. The system (50) according to any of the previous claims, wherein the driveline further comprises a turbine (17, 19) and/or a compressor (14, 15), wherein the rotatable component (14, 19, 32, 58) is a turbine, a compressor, a fan or propeller, a shaft, a gear wheel, a part of an oil seal, a part of a bearing, or a part of a squeeze film damper.

10. The system (50) according to any of the previous claims, wherein the analysis unit (40) is adapted to determine whether the received signals comprise a vibration signature with an amplitude above a predefined threshold.

11. An engine (10) for an aircraft (8) comprising the system (50) according to any of the previous claims.

12. A method for detection of vibration at a driveline including a rotatable component (14, 19, 32, 58) rotatable about a rotational axis (9, R) relative to another component (21, 34, 59), wherein a fluid (53) is arranged in a clearance (CI) between the rotatable component (14, 19, 32, 58) and the other component (21, 34, 59), wherein a rotor (71) of an electrical machine (70) is arranged to drive and/or to be driven by a part of the driveline, wherein the rotatable component (14, 19, 32, 58) is external of the electrical machine (70) and wherein the rotor (71) of the electrical machine (70) and the rotatable component (14, 19, 32, 58) are in operative connection, the method comprising the steps of:
- providing (S1), by means of the electrical machine (70), signals indicative for a motion and/or a force between the rotor (71) and the stator (72) and/or a torque applied on the rotor (71); and
- detecting (S2), by an analysis unit (80) receiving the provided signals, a vibration signature of the rotatable component (14, 19, 32, 58) with respect to the other component (21, 34, 59) based on the signals, wherein the vibration signature is detected within a predetermined frequency range, wherein the predefined frequency range is between 0.1 and 1.0 times the rotational speed of the rotatable component (14, 19, 32, 58) with respect to the other component (21, 34, 59).

13. The method of claim 12, wherein:
- signals indicative for a motion and/or a force between two components (14, 21, 32, 34) and/or a torque applied on one or more component(s) (14, 21, 32, 34) of the driveline at different points in time are provided; and
- the analysis unit (80) receiving the signals determines a property of the vibration signature within a predetermined frequency range based on the signals at the different points in time.

## Patentansprüche

1. System (50) zur Schwingungsdetektion, umfassend:
- eine oder mehrere Antriebsstränge, die eine drehbare Komponente (14, 19, 32, 58) umfassen, die relativ zu einer anderen Komponente (21, 34, 59) um eine Rotationsachse (9, R) drehbar ist, wobei ein Fluid (53) in einem Spalt (Cl) zwischen der drehbaren Komponente (14, 19, 32, 58) und der anderen Komponente (21, 34, 59) angeordnet ist;
- eine elektrische Maschine (70) mit einem Rotor (71) und einem Stator (72), die relativ zueinander drehbar sind, wobei der Rotor (71) angeordnet ist, einen Teil des Antriebsstrangs anzutreiben und/oder von diesem angetrieben zu werden, wobei die elektrische Maschine (70) ausgelegt ist, Signale bereitzustellen, die eine Bewegung und/oder eine Kraft zwischen dem Rotor (71) und dem Stator (72) und/oder ein auf den Rotor (71) ausgeübtes Drehmoment anzeigen, wobei die drehbare Komponente (14, 19, 32, 58) außerhalb der elektrischen Maschine (70) angeordnet ist und wobei der Rotor (71) der elektrischen Maschine (70) und die drehbare Komponente (14, 19, 32, 58) in Wirkverbindung stehen; und
- eine Analyseeinheit (80), die ausgelegt ist, die Signale zu empfangen und auf der Grundlage der Signale eine Schwingungssignatur der drehbaren Komponente (14, 19, 32, 58) relativ zu der anderen Komponente (21, 34, 59) zu detektieren, wobei die Analyseeinheit (80) ausgelegt ist, die Schwingungssignatur innerhalb eines vorbestimmten Frequenzbereichs zu detektieren, wobei der vorbestimmte Frequenzbereich zwischen dem 0,1- bis 1,0-Fachen der Drehzahl der drehbaren Komponente (14, 19, 32, 58) relativ zu der anderen Komponente (21, 34, 59) liegt.

2. System (50) nach Anspruch 1, wobei die Signale asymmetrische Magnetkräfte in der elektrischen Maschine (70) anzeigen und/oder auf diesen basieren.

3. System (50) nach Anspruch 1 oder 2, wobei die elektrische Maschine (70) eine Mehrzahl von Spulen (θ1-θn) umfasst, wobei die Signale Unterschiede zwischen Spannungen und/oder elektrischen Strömen der Mehrzahl von Spulen (θ1-θn) anzeigen und/oder auf diesen basieren.

4. System (50) nach einem der vorhergehenden Ansprüche, wobei der Rotor (71) der elektrischen Maschine (70) und die drehbare Komponente (14, 19) fest miteinander verbunden sind.

5. System (50) nach einem der vorhergehenden Ansprüche, wobei die Analyseeinheit (80) ausgelegt ist, eine Eigenschaft der Schwingungssignatur auf der Grundlage der Signale zu verschiedenen Zeitpunkten zu bestimmen und auf der Grundlage eines Vergleichs der Eigenschaft der Schwingungssignatur mit einem vorbestimmten Schwellenwert einen Befehl zu erzeugen.

6. System (50) nach Anspruch 1, wobei:
- die elektrische Maschine (70) ausgelegt ist, Signale bereitzustellen, die eine Bewegung und/oder eine Kraft zwischen zwei Komponenten (14, 21, 32, 34) und/oder ein Drehmoment anzeigen, das auf eine oder mehrere Komponenten (14, 21, 32, 34) des Antriebsstrangs zu unterschiedlichen Zeitpunkten ausgeübt wird; und
- die Analyseeinheit (80) ausgelegt ist, die Signale zu empfangen und eine Eigenschaft der Schwingungssignatur innerhalb eines vorbestimmten Frequenzbereichs auf der Grundlage der Signale zu den verschiedenen Zeitpunkten zu bestimmen.

7. System (50) nach einem der vorhergehenden Ansprüche, wobei die Analyseeinheit (80) ferner ausgelegt ist, einen Befehl auf der Grundlage eines Vergleichs der Eigenschaft der Schwingungssignatur mit einem vorgegebenen Schwellenwert zu erzeugen.

8. System (50) nach einem der vorhergehenden Ansprüche, wobei die Eigenschaft der Schwingungssignatur eine Frequenz, Phase und/oder Amplitude und/oder zumindest einen Zeitverlaufstrend umfasst.

9. System (50) nach einem der vorhergehenden Ansprüche, wobei der Antriebsstrang ferner eine Turbine (17, 19) und/oder einen Verdichter (14, 15) umfasst, wobei die drehbare Komponente (14, 19, 32, 58) eine Turbine, ein Verdichter, ein Gebläse oder Propeller, eine Welle, ein Zahnrad, ein Teil einer Öldichtung, ein Teil eines Lagers oder ein Teil eines Quetschfilmdämpfers ist.

10. System (50) nach einem der vorhergehenden Ansprüche, wobei die Analyseeinheit (40) ausgelegt ist, zu bestimmen, ob die empfangenen Signale eine Schwingungssignatur mit einer Amplitude oberhalb eines vordefinierten Schwellenwerts umfassen.

11. Triebwerk (10) für ein Flugzeug (8), das das System (50) nach einem der vorhergehenden Ansprüche umfasst.

12. Verfahren zur Detektion von Schwingungen an einem Antriebsstrang, der eine drehbare Komponente (14, 19, 32, 58) umfasst, die relativ zu einer anderen Komponente (21, 34, 59) um eine Rotationsachse (9, R) drehbar ist, wobei ein Fluid (53) in einem Spalt (Cl) zwischen der drehbaren Komponente (14, 19, 32, 58) und der anderen Komponente (21, 34, 59) angeordnet ist, wobei ein Rotor (71) einer elektrischen Maschine (70) angeordnet ist, einen Teil des Antriebsstrangs anzutreiben und/oder von diesem angetrieben zu werden, wobei die drehbare Komponente (14, 19, 32, 58) außerhalb der elektrischen Maschine (70) angeordnet ist und wobei der Rotor (71) der elektrischen Maschine (70) und die drehbare Komponente (14, 19, 32, 58) in Wirkverbindung stehen, wobei das Verfahren die folgenden Schritte umfasst:
- Bereitstellen (S1), mittels der elektrischen Maschine (70), von Signalen, die eine Bewegung und/oder eine Kraft zwischen dem Rotor (71) und dem Stator (72) und/oder ein auf den Rotor (71) ausgeübtes Drehmoment anzeigen; und
- Detektieren (S2), durch eine Analyseeinheit (80), die die bereitgestellten Signale empfängt, einer Schwingungssignatur der drehbaren Komponente (14, 19, 32, 58) relativ zu der anderen Komponente (21, 34, 59) auf der Grundlage der Signale, wobei die Schwingungssignatur innerhalb eines vorbestimmten Frequenzbereichs detektiert wird, wobei der vorbestimmte Frequenzbereich zwischen dem 0,1- bis 1,0-Fachen der Drehzahl der drehbaren Komponente (14, 19, 32, 58) relativ zu der anderen Komponente (21, 34, 59) liegt.

13. Verfahren nach Anspruch 12, wobei:
- Signale bereitgestellt werden, die eine Bewegung und/oder eine Kraft zwischen zwei Komponenten (14, 21, 32, 34) und/oder ein Drehmoment anzeigen, das auf eine oder mehrere Komponenten (14, 21, 32, 34) des Antriebsstrangs zu unterschiedlichen Zeitpunkten ausgeübt wird; und
- die Analyseeinheit (80), die die Signale empfängt, eine Eigenschaft der Schwingungssignatur innerhalb eines vorbestimmten Frequenzbereichs auf der Grundlage der Signale zu den verschiedenen Zeitpunkten bestimmt.

## Revendications

1. Système (50) pour la détection de vibrations, comprenant :
- une ou plusieurs chaînes cinématiques comportant un composant rotatif (14, 19, 32, 58) propre à tourner autour d'un axe de rotation (9, R) par rapport à un autre composant (21, 34, 59), un fluide (53) étant disposé dans un jeu (Cl) entre le composant rotatif (14, 19, 32, 58) et l'autre composant (21, 34, 59) ;
- une machine électrique (70) ayant un rotor (71) et un stator (72) rotatifs l'un par rapport à l'autre, le rotor (71) étant conçu pour entraîner et/ou être entraîné par une partie de la chaîne cinématique, la machine électrique (70) étant adaptée pour fournir des signaux indiquant un mouvement et/ou une force entre le rotor (71) et le stator (72) et/ou un couple appliqué sur le rotor (71), le composant rotatif (14, 19, 32, 58) étant situé à l'extérieur de la machine électrique (70) et le rotor (71) de la machine électrique (70) et le composant rotatif (14, 19, 32, 58) étant en liaison fonctionnelle ; et
- une unité d'analyse (80) adaptée pour recevoir les signaux et détecter une signature de vibration du composant rotatif (14, 19, 32, 58) par rapport à l'autre composant (21, 34, 59) à partir des signaux, l'unité d'analyse (80) étant adaptée pour détecter la signature de vibration dans une plage de fréquences prédéterminée, la plage de fréquences prédéfinie étant comprise entre 0,1 et 1,0 fois la vitesse de rotation du composant rotatif (14, 19, 32, 58) par rapport à l'autre composant (21, 34, 59).

2. Système (50) selon la revendication 1, dans lequel les signaux indiquent et/ou sont basés sur des forces magnétiques asymétriques dans la machine électrique (70).

3. Système (50) selon la revendication 1 ou 2, dans lequel la machine électrique (70) comprend une pluralité de bobines (θ1 à θn), dans lequel les signaux indiquent et/ou sont basés sur des différences entre des tensions et/ou des courants électriques de la pluralité de bobines (θ1 à θn).

4. Système (50) selon l'une quelconque des revendications précédentes, dans lequel le rotor (71) de la machine électrique (70) et le composant rotatif (14, 19) sont reliés l'un à l'autre de manière fixe.

5. Système (50) selon l'une quelconque des revendications précédentes, dans lequel l'unité d'analyse (80) est adaptée pour déterminer une propriété de la signature de vibration sur la base des signaux aux différents points dans le temps, et pour générer une instruction sur la base d'une comparaison de la propriété de la signature de vibration avec un seuil prédéterminé.

6. Système (50) selon la revendication 1, dans lequel :
- la machine électrique (70) est adaptée pour fournir des signaux indiquant un mouvement et/ou une force entre deux composants (14, 21, 32, 34) et/ou un couple appliqué sur un ou plusieurs composant (s) (14, 21, 32, 34) de la chaîne cinématique à différents points dans le temps ; et
- l'unité d'analyse (80) est adaptée pour recevoir les signaux et pour déterminer une propriété de la signature de vibration dans une gamme de fréquences prédéterminée à partir des signaux aux différents points dans le temps.

7. Système (50) selon l'une quelconque des revendications précédentes, dans lequel l'unité d'analyse (80) est en outre adaptée pour générer une instruction basée sur une comparaison de la propriété de la signature de vibration avec un seuil prédéterminé.

8. Système (50) selon l'une quelconque des revendications précédentes, dans lequel la propriété de la signature de vibration comprend une fréquence, une phase et/ou une amplitude et/ou au moins une tendance historique.

9. Système (50) selon l'une quelconque des revendications précédentes, dans lequel la chaîne cinématique comprend en outre une turbine (17, 19) et/ou un compresseur (14, 15), dans lequel le composant rotatif (14, 19, 32, 58) est une turbine, un compresseur, un ventilateur ou une hélice, un arbre, une roue dentée, une partie d'un joint d'huile, une partie d'un palier, ou une partie d'un amortisseur à film fluide.

10. Système (50) selon l'une quelconque des revendications précédentes, dans lequel l'unité d'analyse (40) est adaptée pour déterminer si les signaux reçus comprennent une signature de vibration avec une amplitude supérieure à un seuil prédéfini.

11. Moteur (10) pour un aéronef (8) comprenant le système (50) selon l'une quelconque des revendications précédentes.

12. Procédé de détection de vibrations au niveau d'une chaîne cinématique comprenant un composant rotatif (14, 19, 32, 58) propre à tourner autour d'un axe de rotation (9, R) par rapport à un autre composant (21, 34, 59), un fluide (53) étant disposé dans un jeu (Cl) entre le composant rotatif (14, 19, 32, 58) et l'autre composant (21, 34, 59), un rotor (71) d'une machine électrique (70) étant conçu pour entraîner et/ou être entraîné par une partie de la chaîne cinématique, le composant rotatif (14, 19, 32, 58) étant situé à l'extérieur de la machine électrique (70) et le rotor (71) de la machine électrique (70) et le composant rotatif (14, 19, 32, 58) étant en liaison fonctionnelle, le procédé comprenant les étapes suivantes :
- fournir (S1), au moyen de la machine électrique (70), des signaux indiquant un mouvement et/ou une force entre le rotor (71) et le stator (72) et/ou un couple appliqué sur le rotor (71) ; et
- détecter (S2), par le biais d'une unité d'analyse (80) recevant les signaux fournis, une signature de vibration du composant rotatif (14, 19, 32, 58) par rapport à l'autre composant (21, 34, 59) à partir des signaux, la signature de vibration étant détectée dans une plage de fréquences prédéterminée, la plage de fréquences prédéfinie étant comprise entre 0,1 et 1,0 fois la vitesse de rotation du composant rotatif (14, 19, 32, 58) par rapport à l'autre composant (21, 34, 59).

13. Procédé selon la revendication 12, dans lequel :
- des signaux indiquant un mouvement et/ou une force entre deux composants (14, 21, 32, 34) et/ou un couple appliqué sur un ou plusieurs composant(s) (14, 21, 32, 34) de la chaîne cinématique à différents points dans le temps sont fournis ; et
- l'unité d'analyse (80) recevant les signaux détermine une propriété de la signature de vibration dans une plage de fréquences prédéterminée à partir des signaux aux différents points dans le temps.
